# FASCICULE DE BREVET EUROPEEN

(11) **EP 3 003 019 B1**
(45) Date de publication et mention de la délivrance du brevet: **22.01.2020**
(21) Numéro de dépôt: 14734873.4
(22) Date de dépôt: 06.06.2014
(51) Int. Cl.: A01K 61/70, A01K 61/17

(54) **ENSEMBLE MODULAIRES POUR ALEVINS ET AUTRES ORGANISMES AQUATIQUES**
MODULARE ANORDNUNG FÜR FISCHBRUT UND ANDERE WASSERORGANISMEN
MODULAR ASSEMBLY FOR FRY AND OTHER ACQUATIC ORGANISMS

(30) Priorité: 07.06.2013 FR 1355272
(43) Date de publication de la demande: 13.04.2016
(73) Titulaire: Ecocean, 34070 Montpellier (FR)
(72) Inventeur: LECAILLON, Gilles, 34000 Montpellier (FR)
(74) Mandataire: IP Trust
(86) Numéro de dépôt international: PCT/FR2014/051369
(87) Numéro de publication internationale: WO 2014/195658

(56) Documents cités:
- WO-A1-2013/054183
- WO-A2-99/60844
- FR-A1- 2 974 707
- US-A- 78 952
- US-A- 5 713 303

## Description

### DOMAINE TECHNIQUE DE L'INVENTION

L'invention concerne un ensemble modulaire destiné à être placé dans les fonds aquatiques et permettant de protéger les alevins tout en contribuant à leur développement ainsi qu'à celui des organismes aquatiques autres, tels que des organismes benthiques.

### ETAT DE LA TECHNIQUE

De manière générale, le cycle de vie des poissons côtiers comprend une phase larvaire planctonique (phase au cours de laquelle les œufs des poissons deviennent des larves) de plusieurs semaines, laquelle se termine par un retour volontaire des larves vers la côte pour atteindre les petits fonds côtiers en vue de passer du stade post-larvaire au stade de petits poissons, appelés les juvéniles ou jeunes recrues. Il s'agit de la phase de recrutement.

Les petits fonds côtiers sont essentiels à la survie et au développement des juvéniles. Ils ont une fonction de nurserie. Or, l'habitat naturel offert par les petits fonds côtiers disparaît inexorablement avec l'aménagement des zones côtières, réduisant considérablement la survie des larves et des juvéniles. La réalisation de constructions telles que des piles de pont, des digues, ports modifie en effet profondément l'habitat (suppression d'habitats diversifiés, pollution des petits fonds côtiers, etc.) avec, pour conséquence, une baisse des taux de survie des populations de poissons et une perturbation plus générale de l'écosystème marin.

Afin de palier à cet inconvénient, il a été proposé dans la demande WO2013054183 un module d'habitation pour la protection des alevins ou post-larves de poissons ou de crustacés dans une zone portuaire. Le module d'habitation divulgué se compose d'une cage grillagée apte à être remplie de matériaux tels que des cailloux, des fragments de roches, ou tous matériaux adéquats permettant de former des creux et des cavités de refuges pour les petits poissons et pouvant être fixée le long d'un quai, à une digue ou sous un ponton. Selon un mode de réalisation particulier, la cage grillagée est composée de compartiments intérieurs séparés par des parois grillagées intermédiaires. Des espaces différents peuvent ainsi être aménagés dans une même cage. En particulier, la cage est aménagée de manière à ce que le compartiment donnant sur le large est exempte de matériaux d'enrochement ou similaires pour permettre une entrée rapide des petits poissons et ainsi les protéger des prédateurs, le compartiment donnant sur le quai étant pourvu de matériaux d'enrochement ou similaires pour constituer un habitat de petits poissons.

Le module d'habitation de la demande susmentionnée présente cependant un inconvénient majeur lié à sa maintenance (nettoyage). L'opération de nettoyage consiste en particulier à débarrasser le compartiment de protection des épiphytes tels que moules, algues ou autres s'étant installés au cours de la phase de recrutement des jeunes recrues ou juvéniles et susceptibles d'obstruer l'entrée du compartiment de protection aux petits poissons. Le développement de telles plantes peut être plus ou moins important selon le type de milieu marin dans laquelle le module d'habitation a été placé (milieu oligotrophe ou eutrophe) et l'état d'agitation de celui-ci.

L'opération de nettoyage est réalisée en dehors des phases de recrutement, c'est-à-dire lorsque le module d'habitation n'est pas utilisé par les jeunes recrues et les juvéniles. Mais si les modules d'habitation ne sont temporairement plus habités par des jeunes recrues ou des juvéniles, ils servent d'habitat permanent à des organismes aquatiques benthiques (larves d'oursins, de mollusques, de coraux, etc.) lesquels sont fixés en général dans le compartiment d'habitation des cages, au milieu des matériaux d'enrochement.

Or, le nettoyage du compartiment de protection impose le retrait de l'ensemble du module d'habitation hors de l'eau. En retirant le module d'habitation aux fins de son nettoyage, les communautés benthiques présentes dans le compartiment d'habitation sont alors sacrifiées.

On connait également d'autres structures offrant un habitat protégé pour des poissons ou crustacés, comme par exemple celles décrites dans les documents WO 99/60844, US5713303 et US78952, mais qui ne pallient pas les inconvénients susmentionnés.

L'invention vise à remédier à ces problèmes en proposant un ensemble modulaire assurant conjointement la protection des jeunes recrues et juvéniles et la protection des communautés benthiques durant toute l'année.

Le but de l'invention est de proposer un ensemble modulaire simple de mise en œuvre et permettant de favoriser la survie des larves et des jeunes recrues et d'accroître la biodiversité.

### OBJET DE L'INVENTION

A cet effet, et selon un premier aspect conformément à la revendication indépendante 1, l'invention propose un ensemble modulaire pour alevins et autres organismes aquatiques comprenant au moins un support de matériaux formant des reliefs, des matériaux formant des reliefs aptes à favoriser le développement des alevins et organismes aquatiques, les matériaux étant agencés avec le support de matériaux pour définir une zone d'habitation des alevins et organismes aquatiques, et au moins une structure de protection comprenant des parois grillagées délimitant un volume vide, la structure de protection étant fixée de manière amovible sur le support de matériaux et agencée avec celui-ci pour établir une zone de protection de la zone d'habitation.

Grace au caractère réversible de l'assemblage de la structure de protection avec le support de matériaux définissant la zone d'habitation, l'habitat pour les jeunes poissons peut être maintenu en place dans les eaux en dehors des périodes de recrutement, assurant ainsi la survie des organismes benthiques installés au milieu des matériaux formant des reliefs, tandis que la structure de protection peut être retirée pour être débarrassée des organismes du type épiphytes installés au travers des parois grillagées et susceptibles de gêner l'entrée des juvéniles. La structure de protection constitue ainsi une structure temporaire, mise en œuvre seulement durant les périodes de recrutement des juvéniles et des post-larves, et nettoyée avant chaque nouvelle période de recrutement.

Avantageusement, la structure de protection est fixée sur le support de matériaux par des moyens d'association réciproques.

Selon l'invention, le support de matériaux forme une cage d'habitation enfermant les matériaux formant des reliefs.

Avantageusement, la structure de protection est agencée en vis-à-vis de la cage d'habitation.

Avantageusement, l'ensemble modulaire comporte une pluralité de structures de protection organisées en rangée et/ou en colonne par rapport à la cage d'habitation. Il peut être prévu également que l'ensemble modulaire comporte une pluralité de structures de protection empilées sur la cage d'habitation.

Selon une configuration particulière, l'ensemble modulaire comporte au moins deux structures de protection disposées de part et d'autre de la cage d'habitation.

Avantageusement, les structures de protection sont fixées les unes aux autres de manière amovible.

Avantageusement, la cage d'habitation présente un maillage inférieur à celui de la structure de protection. Ainsi, le maillage pour la cage d'habitation est choisi suffisamment resserré pour garantir la retenue des matériaux formant des reliefs dans ladite cage, tandis que le maillage de la structure de protection est choisi pour assurer une entrée rapide des petits poissons tout en empêchant l'entrée des prédateurs. Selon un mode de réalisation préféré, il est prévu un maillage de la cage d'habitation jusqu'à deux fois inférieur à celui de la cage de protection.

Avantageusement, la cage d'habitation présente une forme adaptée à la construction subaquatique sur laquelle elle est destinée à être fixée. Ainsi, il sera avantageux de prévoir une cage d'habitation par exemple de forme parallélépipédique pour une fixation sur une pile de pont ou bien en forme de U pour enjamber des canalisations ou conduits sous-marins.

Afin d'offrir une zone de protection adaptée à la forme de la cage d'habitation, la structure de protection présente une forme complémentaire à la cage d'habitation.

Avantageusement, l'ensemble modulaire comporte un empilement d'au moins une cage d'habitation et d'au moins une structure de protection. Il peut être prévu une plateforme afin de supporter un tel empilement, ladite plateforme pouvant être avantageusement pourvue d'un mât de levage s'étendant perpendiculairement à celle-ci et traversant la cage d'habitation et la structure de protection. Le mât de levage permet de faciliter l'installation de l'ensemble modulaire sur le fond marin ou bien son retrait. Avantageusement, le mât de levage présente une longueur supérieure à la hauteur des structures de protection empilées et traversées par celui-ci. Il peut être prévu un mât de levage réglable en longueur (mât télescopique ou analogue). Le mât de levage reste ainsi accessible quelque soit la hauteur de l'empilement de structures de protection, et le cas échéant de cages d'habitation, sur la cage d'habitation principale.

Selon un autre mode de réalisation de l'invention, l'ensemble modulaire comporte au moins deux structures de protection disposées de manière adjacente pour définir une enceinte de protection délimitant, avec le support, la zone d'habitation. Avantageusement, le support de matériaux est une plateforme supportant les structures de protection et les matériaux formant des reliefs.

Avantageusement, l'ensemble modulaire comporte au moins une structure se présentant sous la forme d'un bandeau souple pourvu de moyens lumineux aptes à attirer les alevins.

Selon l'invention, la structure de protection forme une cage exempte de matériaux formant des reliefs.

Avantageusement, l'ensemble modulaire comporte au moins une plaque de recouvrement disposées pour couvrir l'une au moins des zones.

L'invention concerne également un arrangement pour la protection d'alevins et autres organismes aquatiques, conformément à la revendication indépendante 13, comprenant au moins un ensemble modulaire tel que décrit précédemment et une structure de fixation apte à être fixée sur une structure telle qu'un quai, un ponton, une digue ou similaires, ladite structure de fixation comprenant des bras d'accroche permettant l'accroche de chaque ensemble modulaire.

Selon une configuration avantageuse, la structure de fixation comporte au moins deux rangées de bras d'accroche, les bras de la rangée inférieure pouvant avoir une longueur différente de celle des bras de la rangée supérieure.

### BREVE DESCRIPTION DES FIGURES

D'autres objets et avantages de l'invention apparaîtront au cours de la description qui suit, faite en référence aux dessins annexés, dans lesquels :
- la figure 1 représente une vue schématique en coupe longitudinale de deux ensembles modulaires selon un premier mode de réalisation de l'invention, les ensembles modulaires étant fixés sur la pile d'un pont ou d'un quai ;
- la figure 2 représente une vue schématique de détail de la fixation de la cage d'habitation d'un des ensembles modulaires de la figure 1 sur la pile de pont ou de quai;
- la figure 3 représente une vue latérale d'un ensemble modulaire selon un deuxième mode de réalisation de l'invention ;
- la figure 4 représente une vue schématique en coupe transversale du module inférieur de l'ensemble modulaire de la figure 3, ce module inférieur n'étant pas conforme à l'invention;
- la figure 5 représente une vue schématique en perspective d'un ensemble modulaire selon un autre mode de réalisation de l'invention ;
- la figure 6 représente une vue schématique de détail de la fixation d'une cage d'habitation sur une paroi métallique ;
- la figure 7 représente une vue de face de l'ensemble modulaire de surface de la figure 6 dont la cage de protection est pourvue de moyens lumineux pour attirer les alevins ;
- la figure 8 représente une vue d'un ensemble modulaire selon un autre mode de réalisation de l'invention fixé sur un ponton flottant ;
- la figure 9 représente une vue schématique de l'ensemble modulaire de surface de la figure 1 fixé sur la pile de pont, quai ou similaire par une structure de fixation intermédiaire ;
- la figure 10 représente une vue schématique en perspective de la structure de fixation intermédiaire mise en œuvre avec l'ensemble modulaire de la figure 9 ;
- la figure 11 représente une vue latérale d'une variante de réalisation de l'ensemble modulaire de la figure 4, dont le module inférieur n'est pas conforme à l'invention;
- la figure 12 représente une vue schématique en coupe transversale du module inférieur de l'ensemble modulaire de la figure 11 , ce module inférieur n'étant pas conforme à l'invention;
- la figure 13 représente une variante pour la fixation d'un ensemble modulaire selon l'invention.

Pour plus de clarté, les éléments identiques ou similaires des différents modes de réalisation sont repérés par des signes de référence identiques sur l'ensemble des figures.

### DESCRIPTION DETAILLEE DES FIGURES

Selon l'emplacement choisi, les ensembles modulaires selon l'invention diffèrent dans leur structure et agencement mais leur rôle et leur fonctionnement restent similaires. Ainsi, et de manière générale, l'ensemble modulaire selon l'invention comprend au moins un support de matériaux formant des reliefs, des matériaux formant des reliefs agencés avec le support de matériaux pour définir une zone d'habitation des alevins (juvéniles ou jeunes recrues) et des organismes aquatiques ainsi qu'au moins une structure de protection comprenant des parois grillagées délimitant un volume vide, la structure de protection étant fixée de manière amovible sur le support de matériaux et agencée avec celui-ci pour établir une zone de protection de la zone d'habitation.

Les matériaux formant des reliefs 9, par la suite appelés matériaux d'enrochement 9, sont choisis pour favoriser le développement des juvéniles et organismes aquatiques. Ils comportent de préférence des roches naturelles ou de matériaux recyclés naturels. De préférence, ils comprennent des coquilles d'huitres. Ce type de matériau d'enrochement est en effet plus léger et présente par conséquent moins de contraintes au niveau des fixations mises en œuvre au niveau des constructions subaquatiques. En outre, un tel matériau produit des cavités et des anfractuosités réduites et de ce fait engendre une plus grande diversité de nourriture.

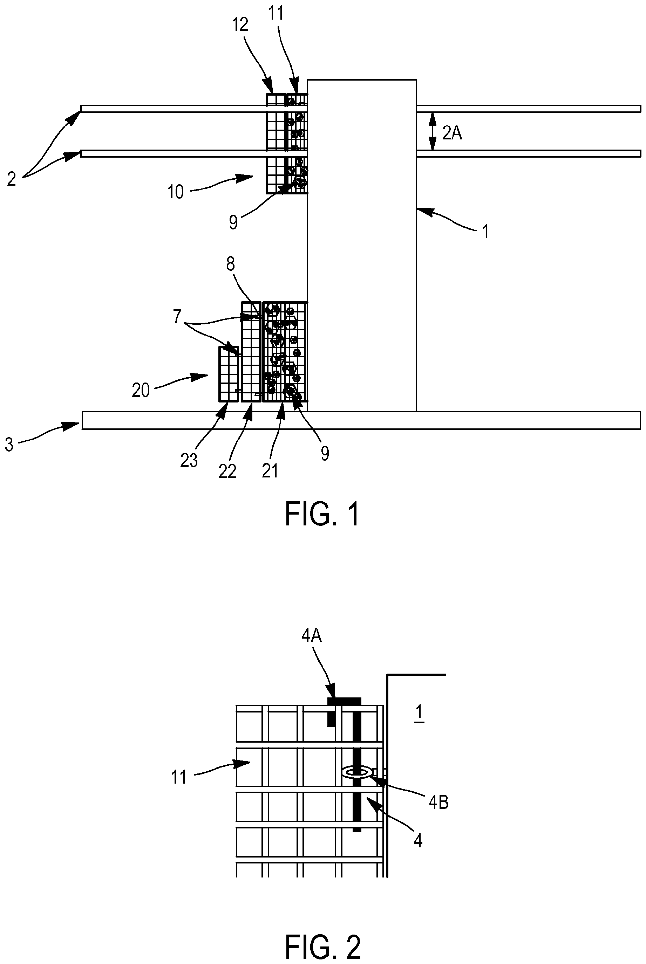

Ainsi, et en relation avec les figures 1 et 2, il est décrit deux ensembles modulaires 10, 20 mis en œuvre au niveau d'une pile de pont 1 (ou d'un quai), un premier ensemble modulaire 10 fixé en haut de la pile de pont 1, au niveau de la zone de marnage 2A et un deuxième ensemble modulaire 20 fixé à la base de la pile du pont 1, à proximité du fond marin 3. Il est bien entendu évident que la position des ensembles modulaires sur la pile de pont est donnée à titre d'exemple et qu'il peut être prévu d'autres emplacements sans sortir du cadre de l'invention.

Dans ce qui suit, le premier ensemble modulaire est appelé ensemble modulaire de surface 10, et le deuxième ensemble modulaire est appelé ensemble modulaire de fond 20.

Dans le mode de réalisation illustré, l'ensemble modulaire de surface 10 est constitué de deux cages indépendantes 11, 12 grillagées, de forme parallélépipédique. Les cages sont de préférence métalliques, et plus particulièrement réalisée en acier zingué.

L'une des cages 11 est fixée sur la pile de pont 1, l'une de ses parois latérales faisant face à la pile de pont 1 tandis que la paroi latérale opposée à la paroi faisant face à la pile de pont porte l'autre cage 12. Ainsi, et comme illustré sur la figure 1, l'une des cages fait face à la pile de pont, l'autre faisant face au large.

On désigne dans ce qui suit par « paroi avant » d'une cage, la paroi la plus éloignée de la pile de pont et par « paroi arrière » d'une cage, la paroi la plus proche de la pile de pont.

La cage 11 faisant face à la pile de pont 1 est remplie de matériaux d'enrochement 9 formant un habitat pour les juvéniles mais également pour les organismes aquatiques benthiques. Elle constitue ainsi une cage d'habitation 11.

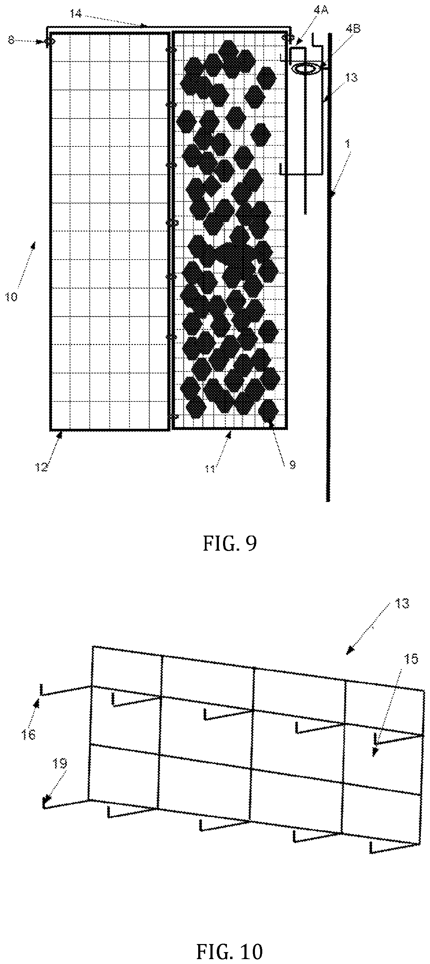

La cage d'habitation 11 est fixée sur la pile de pont 1 au moyen de systèmes d'accroche représenté sur la figure 2. Le système d'accroche 4 comprend une goupille 4A, de préférence en acier, apte à coopérer avec un piton 4B, de préférence en acier, ancré dans la pile de pont ou du quai 1. Afin d'assurer une fixation suffisante de l'ensemble modulaire sur la pile de pont 1, il est nécessaire de prévoir au moins deux pitons et deux goupilles associées par ensemble modulaire à fixer sur la pile de pont ou du quai 1. L'étape de préparation de la structure destinée à supporter un ensemble modulaire sera donc d'autant plus longue qu'il y aura d'ensembles modulaires à fixer. Afin de palier cet inconvénient, il peut être prévu de fixer les ensembles modulaires non pas directement sur des pitons ancrés dans la pile de pont (ou autres), mais sur une structure de fixation 13 venant se positionner entre l'ensemble modulaire et la pile de pont et étant retenue par les goupilles montées respectivement dans un piton comme illustré sur la figure 9. La structure de fixation 13 est formée d'un treillis 15, de préférence métallique, pourvue d'une pluralité de bras d'accroche 16. Dans le mode de réalisation illustré, le treillis 15 est pourvu de deux rangées de bras d'accroche 16 de même longueur, chaque rangée comprenant cinq bras d'accroche. Il est bien entendu évident que l'invention ne se limite pas à cette configuration, le nombre de bras et de rangées pouvant varier en fonction de la taille des cages d'habitation à fixer ainsi que du nombre d'ensemble modulaire à fixer sur le treillis. L'avantage de fixer les ensembles modulaires par l'intermédiaire d'une telle structure est de réduire le nombre de pitons à fixer sur la pile de quai. On comprend en effet qu'il n'est plus nécessaire de prévoir un nombre de pitons en fonction du nombre d'ensembles modulaires à fixer, mais simplement un nombre de pitons suffisant pour assurer une fixation satisfaisante de la structure de fixation 13 sur la pile de pont ou sur le quai.

Dans le mode de réalisation illustré, les extrémités libres des bras 16 sont prolongés par un ergot 19 vertical s'étendent vers le haut, i.e. en direction de la surface lorsque la structure de fixation 130 est fixée au quai 1. Afin de faciliter le montage de la cage d'habitation 11 sur la structure de fixation 13, il peut être prévu que les bras soient équipés, non pas d'ergots verticaux ascendants, mais d'ergots verticaux descendants, i.e. qui s'étendent en direction du fond marin lorsque la structure de fixation 13 est fixée au quai 1.

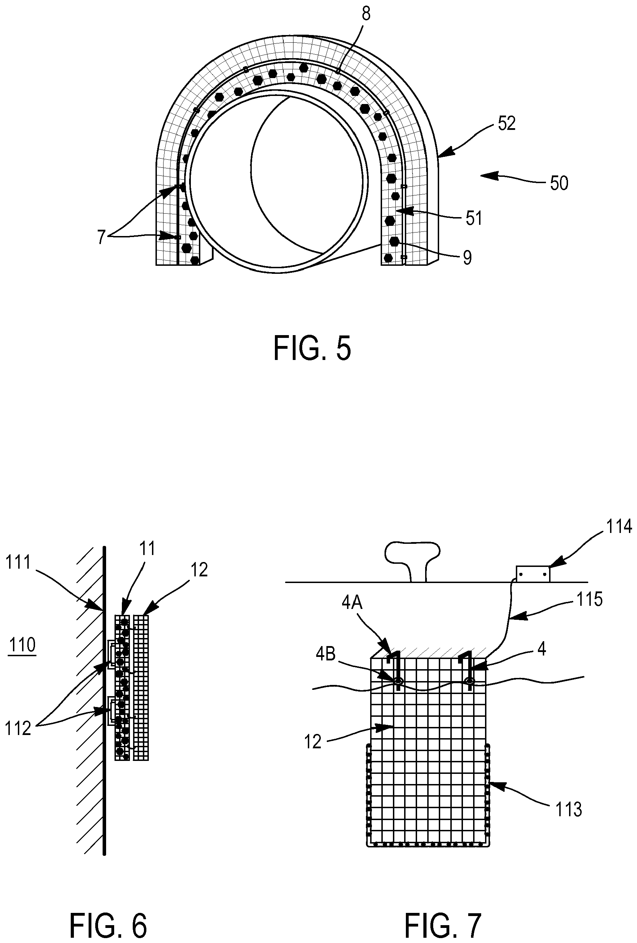

Il est bien entendu évident que la fixation à l'aide de pitons et goupilles est donnée à titre d'exemple et qu'il peut être prévu d'autres moyens de fixation sans sortir du cadre de l'invention. A titre d'exemple et comme illustré sur la figure 6, lorsque l'ensemble modulaire est destiné à être fixé sur un quai 110 pourvu de palplanches métalliques 111, il peut être prévu sur la cage d'habitation des aimants 112 à haute intensité.

Avantageusement, la cage d'habitation 11 comporte une ouverture pour le passage des matériaux d'enrochement fermée par un couvercle (non représenté).

La cage 12 faisant face au large est quant à elle vide. Disposée en amont de la cage d'habitation 11, elle délimite une zone de protection (périmètre de sécurité) des juvéniles quand, agressés par des prédateurs, ils cherchent à se rapprocher naturellement de l'habitat. Dépourvue de tout matériau d'enrochement ou similaires, elle permet en effet aux juvéniles d'entrer rapidement dans la cage 12 en cas de menaces de prédateurs. La cage exempte de tout matériau d'enrochement constitue ainsi une structure de protection 12 au sens de l'invention.

La cage de protection 12 est fixée de manière amovible sur la cage d'habitation 11. Avantageusement, le système de fixation 7 consiste en des colliers de serrage 8 de type Colson. La cage de protection 12 peut ainsi être décrochée de la cage d'habitation 11 de manière simple et rapide. Il est bien entendu évident qu'il pourra être fait appel à tout autre moyen classique de fixation sans sortir du cadre de l'invention. Les moyens de fixation pourront être réversibles ou non.

Avantageusement, la cage de protection 12 présente des dimensions identiques à celle de la cage d'habitation 11. Il peut être cependant prévu des cages de dimensions différentes, et en particulier de profondeur différente.

Avantageusement, le maillage de chaque cage est variable et modulable. Il est cependant préféré de prévoir un maillage réduit pour la cage d'habitation 11 afin, d'une part de rigidifier ladite cage, et d'autre part d'éviter que le matériau d'enrochement 9 de s'échappe lors de l'installation de l'ensemble modulaire dans le fond marin. Avantageusement, le maillage de la cage d'habitation 11 est jusqu'à deux fois inférieur à celui de la cage de protection 12.

Dans le mode de réalisation illustré, seule une cage de protection 12 est placée sur la paroi avant de la cage d'habitation 11. Il est bien entendu évident qu'il peut être également prévu d'autres cages de protection, ces cages étant disposées sur les parois latérales de la cage de protection, de manière à entourer la cage d'habitation. La protection des juvéniles en cas d'attaque de prédateurs est ainsi améliorée.

Une fois installée dans le fond marin, la cage d'habitation 11 forme une cage fixe, tandis que la cage de protection 12 forme une cage mobile. Cette dernière, comme décrit précédemment, est destinée à être changée ou nettoyée régulièrement (tous les six à douze mois environ) afin d'éviter que ne s'installent des épiphytes tels que des moules, des algues encroutantes ou autres, obstruant le passage au travers des mailles.

L'ensemble modulaire de fond 20 comporte, quant à lui, trois cages grillagées similaires à celles décrites ci-dessus, l'une constituant une cage d'habitation 21, les deux autres constituant des cages de protection 22, 23. Dans le mode de réalisation illustré, les deux cages de protection 22, 23 sont disposées en série par rapport à la cage d'habitation 21. Ainsi, l'une des cages de protection 22, de même hauteur et largeur que la cage d'habitation 21, est fixée sur la paroi avant de la cage d'habitation 21, l'autre cage de protection 23 étant montée sur la paroi avant de la cage de protection 22 fixée sur la cage d'habitation 21. La cage de protection 23 faisant face au large présente une hauteur inférieure à celle de la cage intermédiaire (cage de protection 22 fixée sur la cage d'habitation). Dans le mode de réalisation illustré, les cages de protection 22, 23 présentent respectivement une profondeur inférieure à celle de la cage d'habitation 21. Il est bien entendu évident que les cages ne se limitent pas au dimensionnement décrit ci-dessus, et qu'il peut être prévu des cages de protection de hauteur et de largeur différentes de celles des cages d'habitation sans sortir du cadre de l'invention.

Afin d'attirer les alevins vers les cages d'habitation, les cages de protection sont avantageusement pourvues d'un ou plusieurs bandeau(x) souple(s) et étanche(s) pourvu(s) de moyens lumineux (du type LED) émettant de la lumière adaptée (figure 7). Les bandeaux lumineux 113 sont reliés par une liaison filaire 115 à un boîtier électronique 114 disposé, par exemple, sur le quai 110. Les bandeaux lumineux 113 peuvent être fixés sur les cages de protection par tout moyen de fixation classique. Selon un agencement préféré, ils sont fixés en les passant alternativement au dessous et au dessus des armatures constituant la paroi grillagée des cages de protection. Avantageusement, ils sont amovibles. Dans le mode de réalisation illustré, la cage de protection comporte un bandeau lumineux s'étendant partiellement sur les parois latérales et la paroi inférieure de ladite cage. Il pourrait bien entendu s'agir de plusieurs bandeaux lumineux.

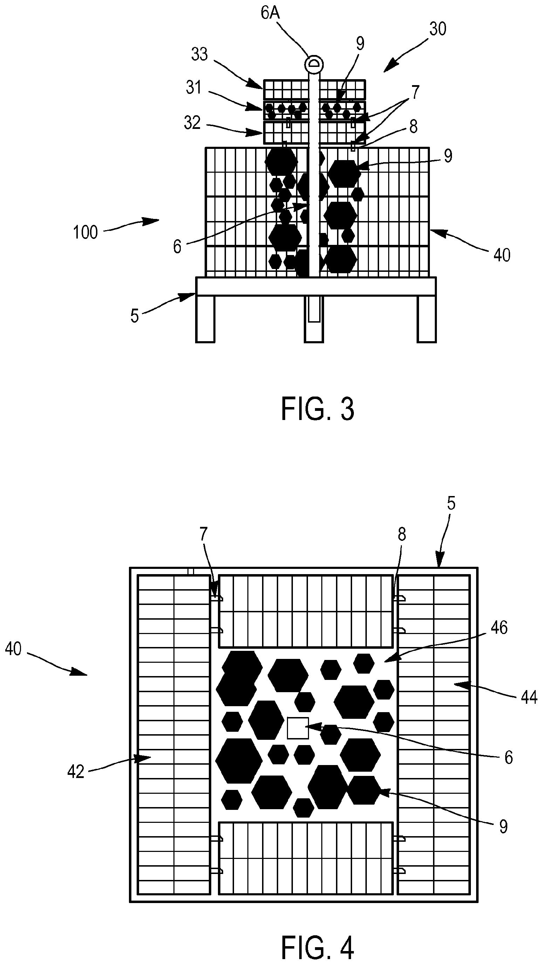

Les figures 3 et 4 représentent un ensemble modulaire 100 destiné à reposer sur un fond marin 3. L'ensemble modulaire 100 illustré comporte deux modules distincts superposés : un module supérieur référencé 30 et un module inférieur référencé 40, ce module inférieur 40 n'étant pas conforme à l'invention.

Dans le mode de réalisation décrit, le module supérieur 30 est formé d'un support de matériaux 31 disposé entre deux cages de protection 32, 33. Comme précédemment, le support de matériaux 31 se présente sous la forme d'une cage d'habitation 31. Le module supérieur 30 est agencé sur le module inférieur 40 de manière à présenter l'une des cages de protection, dite cage de protection inférieure 32, en vis-à-vis du module inférieur 40, l'autre cage de protection, dite cage de protection supérieure 33, faisant face à la surface de l'eau 2. Comme précédemment, les cages de protection 32, 33 du module supérieur 30 sont fixées de manière amovible avec la cage d'habitation 31 du même module. De même, la cage de protection inférieure 32 du module secondaire 30 est fixée de manière amovible sur le module inférieur 40. De même, la cage d'habitation 31 de module supérieur présente un maillage inférieur à celui des cages de protection 32, 33 l'entourant.

Le module inférieur 40 comporte quant à lui quatre cages de protection 42 à 45 (ie. exemptes de matériaux d'enrochement), de forme parallélépipédique. Les quatre cages de protection 42 à 45 sont agencées les unes par rapport aux autres de manière à délimiter une zone interne 46 remplie de matériaux d'enrochement 9. La zone interne forme ainsi une zone d'habitation 46.

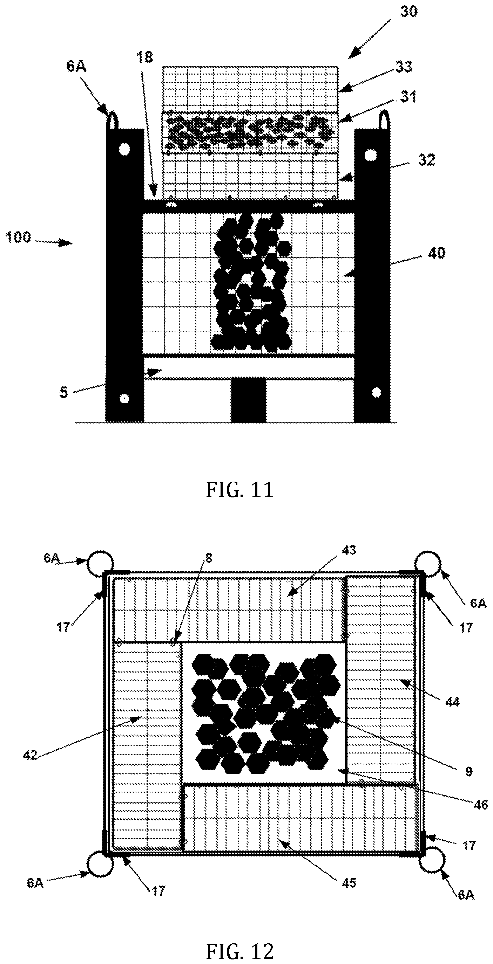

Les figures 3 et 4, montrent des cages de protection 42 à 45 de longueur différente et de largueur identique. Il est bien entendu évident que les cages de protection peuvent présenter un dimensionnement autre que celui représenté sur ces figures. En particulier, elles peuvent être de même longueur et dans ce cas elles seront agencées en quinconce comme illustré sur la figure 12. De même elles pourraient présenter des largeurs différentes.

Les cages de protection 42 à 45 sont fixées sur une plateforme 5 pourvue en son centre d'un mât de levage 6 afin de faciliter la manipulation de l'ensemble modulaire 100 lors de la pose de ce dernier sur le fond marin 3 ou de son retrait. Avantageusement, le mât de levage 6 s'étend perpendiculairement à cette dernière et présente, à son extrémité libre, un anneau de préhension 6A. Le mât 6 est dimensionné pour pouvoir traverser le maillage des cages 31, 32, 33. Avantageusement, il présente une section augmentant en direction de la plateforme 5. Selon une variante de réalisation, il peut être prévu que les cages du module supérieur 30 présentent des parois supérieures et inférieures pourvues d'une ouverture pour permettre le passage du mât de levage 6. Les termes « supérieur » et « inférieur » sont définis par rapport aux cages en position dans le fond marin.

Deux cages de protection 42, 44 s'étendent le long de deux bords longitudinaux opposés de la plateforme 8, et sont reliées l'une à l'autre par les deux autres cages de protection 43, 45 s'étendant sur les autres bords longitudinaux de la plateforme 5. Les cages de protection 42 à 45 sont reliées entre elles de manière amovible.

Les figures 11 et 12 illustrent une variante de réalisation de l'ensemble modulaire 100. Dans ce mode de réalisation, la plateforme 5, de forme parallélépipédique, est pourvue au niveau de chacun de ses coins d'une cornière 17. La plateforme 5 et les cornières 17 sont formées d'un seul tenant ou solidaire l'une à l'autre de manière à former une seule et même pièce. Chaque cornière 17 présente, au niveau de son extrémité libre, un anneau de préhension 6A pour permettre la préhension et le levage de la plateforme 5. La plateforme 5 et les cornières 17 délimitent un volume recevant les cages de protection 42 à 45. Comme précédemment, les cages de protections 42 à 45 sont agencées les unes par rapport aux autres de manière à délimiter une zone interne 46 remplie de matériaux d'enrochement 9 formant une zone d'habitation. Avantageusement, les cornières 17 sont reliées entre elles par une plaque 18, ladite plaque s'étendant sur les cages de protection 42 à 45. Dans ce mode de réalisation, le module supérieur 30 est fixé de manière amovible sur la plaque à l'aide par exemple de colliers de serrage 8. La plaque peut être grillagée pour permettre le passage des alevins entre le module inférieur 40, qui ne fait pas partie de la présente invention, et le module supérieur 30, ou non ajourée.

La plateforme 5, les cornières 17, les cages 42 à 45 et la plaque 18 sont assemblées pour constituer un socle indépendant apte à supporter un ou plusieurs ensembles modulaires.

Avantageusement, la plateforme 5 est ajourée de manière à laisser passer l'eau lors de la remontée de la plateforme.

La figure 5 montre un ensemble modulaire 50 mis en œuvre au niveau d'un conduit 100 tel qu'une canalisation ou un conduit sous-marin. L'ensemble modulaire 50 comprend deux cages 51, 52 grillagées et arrangées pour former un pont enjambant le conduit 100. La cage adjacente au conduit constitue la cage d'habitation 51. La cage la plus éloignée du conduit constitue la cage de protection 52.

Dans le mode de réalisation illustré, les deux cages 51, 52 présentent une forme en U inversé afin de suivre les courbes du conduit 100 auquel l'ensemble modulaire 50 est fixé. Il est bien entendu évident que les cages ne se limitent pas à cette forme est que d'autres formes peuvent être envisagées sans pour autant sortir du cadre de l'invention.

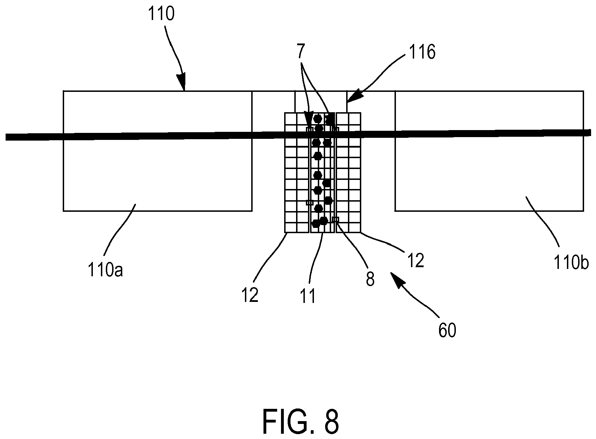

La figure 8 montre un ensemble modulaire 60 suspendu entre deux blocs flottants 110a, 110b d'un quai 110. Dans le mode de réalisation illustré, l'ensemble modulaire 60 est formé d'une cage d'habitation 11 disposée entre deux cages de protection 12. Les cages 11, 12 ont une forme parallélépipédique. L'ensemble modulaire 60 est raccordé aux blocs flottants 110 au moyen d'un système de suspente 116.

Afin d'éviter que des déchets, ou des poissons non juvéniles restent piégés sur la surface supérieure de l'ensemble modulaire lors du mouvement descendant des eaux, l'ensemble modulaire est avantageusement recouvert d'une plaque 14 lisse, de préférence plane ou légèrement convexe, comme illustré sur la figure 9. Ainsi, lors de la baisse du niveau de l'eau sous la surface supérieure de l'ensemble modulaire, les déchets et poisson glissent sur la surface vers les bords externes de sorte qu'ils ne restent pas piégés sur celle-ci. La plaque 14, dite plaque de recouvrement, est fixée de manière amovible sur l'ensemble modulaire. Avantageusement, les moyens de fixation utilisés sont des colliers de serrage 8 du type Colson. Il peut bien entendu être fait appel à tout autre moyen classique de fixation sans sortir du cadre de l'invention. Dans le mode de réalisation illustré, la cage d'habitation 11 et la cage de protection 12 est recouverte par une seule et même plaque de recouvrement 14. Selon une variante, il peut être prévu que chaque cage soit indépendamment recouverte d'une plaque de recouvrement.

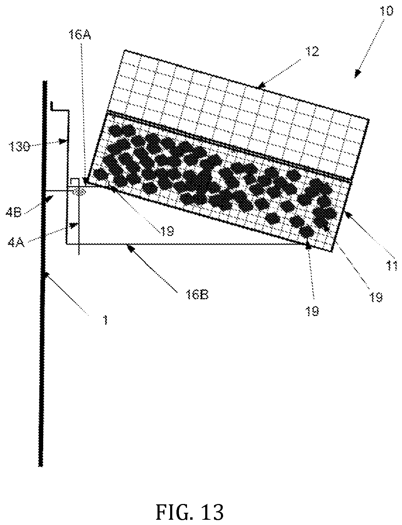

La figure 13 illustre une variante de fixation d'un ensemble modulaire semblable à l'ensemble modulaire de surface illustré sur la figure 1. On le désigne également par la référence 10. L'ensemble modulaire 10 est fixé sur la pile de quai par l'intermédiaire d'une structure de fixation 130, cette dernière étant fixée sur la pile de pont au moyen des pitons 4B sur lesquelles elle est montée et des goupilles 4A enclenchées dans les pitons.

La structure de fixation 130 est sensiblement similaire à celle illustré sur la figure 9. Ainsi, elle comporte un treillis 15, de préférence métallique, pourvue d'une pluralité de bras d'accroche 16A, 16B. Avantageusement, le treillis est pourvue de deux rangées comprenant au moins deux bras d'accroche chacune. Dans le mode de réalisation illustré, les bras d'accroche 16A de la rangée supérieure sont disposés sensiblement à mi-hauteur du treillis tandis que les bras d'accroche 16B de la rangée inférieure sont disposés au niveau de l'extrémité inférieure du treillis. Les bras d'accroche 16A, 16B de chaque rangée s'étendent sensiblement perpendiculairement par rapport au treillis. Afin de positionner l'ensemble modulaire 10 incliné par rapport au quai 1, les bras d'accroche 16B de la rangée inférieure présentent une longueur supérieure à celle des bras d'accroche 16A de la rangée supérieure. L'inclinaison de l'ensemble modulaire 10 est définie en fonction de la distance entre les bras 16A de la rangée supérieure et les bras 16B de la rangée inférieure ainsi que de la longueur des bras de chacune des rangées. Un tel arrangement des bras permet de placer l'ensemble modulaire dans une position se rapprochant de l'écosystème.

Dans le mode de réalisation illustré, les extrémités libres des bras 16A, 16B de chaque rangées sont prolongés par un ergot 19 vertical s'étendent vers le haut, i.e. en direction de la surface lorsque la structure de fixation 130 est fixée au quai 1. Afin de faciliter le montage de la cage d'habitation 11 sur la structure de fixation 130, il peut être prévu que les bras soient équipés, non pas d'ergots verticaux ascendants, mais d'ergots verticaux descendants, i.e. qui s'étendent en direction du fond marin lorsque la structure de fixation 130 est fixée au quai 1.

Les structures de fixation 13, 130 des figures 9, 10 et 13 sont décrites en relation avec des ensemble modulaires selon l'invention. Il est bien entendu évident que ces structures de fixation ne se limitent pas à la fixation de tels ensembles modulaires, ces dernières pouvant peuvent être mises en œuvre avec différents types de cages ou d'autres types d'ensembles modulaires.

L'invention est décrite dans ce qui précède à titre d'exemple. Il est entendu que l'homme du métier est à même de réaliser différentes variantes de réalisation de l'invention sans pour autant sortir du cadre de l'invention, tel que défini par les revendications suivantes.

## Revendications

1. Ensemble modulaire (10, 20, 30, 50, 60) pour alevins et autres organismes aquatiques comprenant :
- au moins un support (5,11,21,31) de matériaux formant des reliefs,
- des matériaux (9) formant des reliefs aptes à favoriser le développement des alevins et organismes aquatiques, lesdits matériaux étant agencés avec le support (11, 21, 31, 41) de matériaux pour définir une zone d'habitation des alevins et organismes aquatiques et
- au moins une structure de protection (12, 22, 23, 32, 33,42,43,44,45) comprenant des parois grillagées délimitant un volume vide, ladite structure de protection étant fixée de manière amovible sur le support (11, 21, 31, 41) de matériaux et agencée avec celui-ci pour établir une zone de protection de la zone d' habitation,
le support de matériaux formant une cage d'habitation (11, 21, 31) enfermant les matériaux (9) formant des reliefs,
**caractérisé en ce que** la structure de protection forme une cage exempte de matériaux formant des reliefs.

2. Ensemble modulaire (10, 20, 30, 50, 60) selon la revendication 1, **caractérisé en ce que** la structure de protection (12, 22, 23, 32) est agencée en vis-à-vis de la cage d'habitation (11, 21, 31).

3. Ensemble modulaire (10, 20, 30, 50, 60) selon la revendication 1 ou la revendication 2, **caractérisé en ce qu'**il comporte une pluralité de structures de protection (12, 22, 23, 32) organisées en rangée et/ou en colonne par rapport à la cage d'habitation (11, 21, 31A, 31B).

4. Ensemble modulaire (10, 20, 30, 50, 60) selon l'une quelconque de revendications 1 à 3, **caractérisé en ce qu'**il comporte une pluralité de structures de protection (12, 22, 23, 32) organisées empilées sur la cage d'habitation (11, 21, 31).

5. Ensemble modulaire (10, 20, 30, 50, 60) selon l'une quelconque des revendications 1 à 4, **caractérisé en ce qu'**il comporte au moins deux structures de protection (32, 33) disposées de part et d'autre de la cage d'habitation (31B).

6. Ensemble modulaire (10, 20, 30, 50, 60) selon l'une quelconque des revendications 3 à 5, **caractérisé en ce que** les structures de protection (12, 22, 23, 32, 33) sont fixées les unes aux autres de manière amovible.

7. Ensemble modulaire (10, 20, 30, 50, 60) selon l'une quelconque de revendications 1 à 6, **caractérisé en ce que** la cage d'habitation (11, 21, 31, 31) présente un maillage inférieur à celui de la structure de protection (12, 22, 23, 32, 33).

8. Ensemble modulaire (10, 20, 30, 50, 60) selon l'une quelconque de revendications 1 à 7, **caractérisé en ce que** la cage d'habitation présente une forme adaptée à la construction subaquatique sur laquelle elle est destinée à être fixée.

9. Ensemble modulaire (10, 20, 30, 50, 60) selon l'une quelconque de revendications 1 à 8, **caractérisé en ce que** la structure de protection (12, 22, 23, 32, 33) présente une forme complémentaire à la cage d'habitation (11, 21, 31,).

10. Ensemble modulaire (10, 20, 30, 50, 60) selon l'une quelconque des revendications 1 à 9, **caractérisé en ce qu'**il comporte un empilement d'au moins une cage d'habitation et d'au moins une structure de protection.

11. Ensemble modulaire (10, 20, 30, 50, 60) selon l'une quelconque des revendications précédentes, **caractérisé en ce qu'**il comporte au moins une structure se présentant sous la forme d'un bandeau souple pourvu de moyens lumineux aptes à attirer les alevins.

12. Ensemble modulaire (10, 20, 30, 50, 60) selon l'une quelconque des revendications précédentes, **caractérisé en ce qu'**il comporte au moins une plaque de recouvrement (14) disposées pour couvrir l'une au moins des zones.

13. Arrangement pour la protection d'alevins et autres organismes aquatiques comprenant au moins un ensemble modulaire (10, 20, 30, 50, 60) selon l'une quelconque des revendications précédentes et une structure de fixation (13,130) apte à être fixée sur une structure telle qu'un quai, un ponton, une digue ou similaires, ladite structure de fixation comprenant des bras d'accroche permettant l'accroche de chaque ensemble modulaire.

14. Arrangement selon la revendication précédente, **caractérisé en ce que** la structure de fixation comporte au moins deux rangées de bras d'accroche, les bras de la rangée inférieure pouvant avoir une longueur différente de celle des bras de la rangée supérieure.

## Patentansprüche

1. Modulare Einheit (10, 20, 30, 50, 60) für Jungfische und andere Wasserorganismen, die Folgendes umfasst:
- mindestens einen Träger (5, 11, 21, 31) für reliefbildende Materialien,
- reliefbildende Materialien (9), die dazu geeignet sind, die Entwicklung von Jungfischen und Wasserorganismen zu fördern, wobei die Materialien mit dem Materialträger (11, 21, 31, 41) so angeordnet sind, dass ein Lebensraum für Jungfische und Wasserorganismen abgegrenzt wird, und
- mindestens eine Schutzkonstruktion (12, 22, 23, 32, 33, 42, 43, 44, 45) mit Gitterwänden, die ein Hohlvolumen abgrenzen, wobei die Schutzkonstruktion abnehmbar auf dem Materialträger (11, 21, 31, 41) befestigt und mit diesem so angeordnet ist, dass für den Lebensraum ein Schutzbereich gebildet wird, wobei der Materialträger einen die reliefbildenden Materialien (9) umschließenden Käfig (11, 21, 31) für den Lebensraum bildet, **dadurch gekennzeichnet, dass** die Schutzkonstruktion einen Käfig ohne reliefbildende Materialien bildet.

2. Modulare Einheit (10, 20, 30, 50, 60) nach Anspruch 1, **dadurch gekennzeichnet, dass** die Schutzkonstruktion (12, 22, 23, 32) gegenüber dem Käfig (11, 21, 31) für den Lebensraum angeordnet ist.

3. Modulare Einheit (10, 20, 30, 50, 60) nach Anspruch 1 oder Anspruch 2, **dadurch gekennzeichnet, dass** sie eine Vielzahl von Schutzkonstruktionen (12, 22, 23, 32) umfasst, die in Bezug auf den Käfig (11, 21, 31A, 31B) für den Lebensraum in Reihen und/oder übereinander angeordnet sind.

4. Modulare Einheit (10, 20, 30, 50, 60) nach einem der Ansprüche 1 bis 3, **dadurch gekennzeichnet, dass** sie eine Vielzahl von Schutzkonstruktionen (12, 22, 23, 32) umfasst, die auf dem Käfig (11, 21, 31) für den Lebensraum gestapelt sind.

5. Modulare Einheit (10, 20, 30, 50, 60) nach einem der Ansprüche 1 bis 4, **dadurch gekennzeichnet, dass** sie mindestens zwei Schutzkonstruktionen (32, 33) umfasst, die zu beiden Seiten des Käfigs (31B) für den Lebensraum angeordnet sind.

6. Modulare Einheit (10, 20, 30, 50, 60) nach einem der Ansprüche 3 bis 5, **dadurch gekennzeichnet, dass** die Schutzkonstruktionen (12, 22, 23, 32, 33) abnehmbar aneinander befestigt sind.

7. Modulare Einheit (10, 20, 30, 50, 60) nach einem der Ansprüche 1 bis 6, **dadurch gekennzeichnet, dass** der Käfig (11, 21, 31, 31) für den Lebensraum eine Maschenweite aufweist, die kleiner als die der Schutzkonstruktion (12, 22, 23, 32, 33) ist.

8. Modulare Einheit (10, 20, 30, 50, 60) nach einem der Ansprüche 1 bis 7, **dadurch gekennzeichnet, dass** der Käfig für den Lebensraum eine Form aufweist, die an die Unterwasserkonstruktion, an der er befestigt werden soll, angepasst ist.

9. Modulare Einheit (10, 20, 30, 50, 60) nach einem der Ansprüche 1 bis 8, **dadurch gekennzeichnet, dass** die Schutzkonstruktion (12, 22, 23, 32, 33) eine zum Käfig (11, 21, 31) für den Lebensraum komplementäre Form aufweist.

10. Modulare Einheit (10, 20, 30, 50, 60) nach einem der Ansprüche 1 bis 9, **dadurch gekennzeichnet, dass** sie eine Stapelung von mindestens einem Käfig für den Lebensraum und mindestens einer Schutzkonstruktion umfasst.

11. Modulare Einheit (10, 20, 30, 50, 60) nach einem der vorhergehenden Ansprüche, **dadurch gekennzeichnet, dass** sie mindestens eine Vorrichtung in Form eines flexiblen Bandes umfasst, das mit Leuchtmitteln versehen ist, die in der Lage sind, die Jungfische anzuziehen.

12. Modulare Einheit (10, 20, 30, 50, 60) nach einem der vorhergehenden Ansprüche, **dadurch gekennzeichnet, dass** sie mindestens eine Abdeckplatte (14) umfasst, die so angeordnet ist, dass sie mindestens einen der Bereiche abdeckt.

13. Anordnung zum Schutz von Jungfischen und anderen Wasserorganismen, die mindestens eine modulare Einheit (10, 20, 30, 50, 60) nach einem der vorhergehenden Ansprüche umfasst und eine Befestigungsstruktur (13, 130), die an einer Struktur wie einem Dock, einem Ponton, einem Deich oder ähnlichem befestigt werden kann, wobei die Befestigungsstruktur Hakenarme umfasst, die die Befestigung jeder modularen Anordnung ermöglichen.

14. Anordnung nach dem vorhergehenden Anspruch, **dadurch gekennzeichnet, dass** die Befestigungsstruktur mindestens zwei Reihen Hakenarme umfasst, wobei die Arme der unteren Reihe eine andere Länge aufweisen können als die Arme der oberen Reihe.

## Claims

1. A modular assembly (10, 20, 30, 50, 60) for fry and other aquatic organisms comprising:
- at least one support (5, 11, 21, 31) of materials forming reliefs,
- materials (9) forming reliefs liable to encourage the growth of fry and aquatic organisms, said materials being arranged with the material support (11, 21, 31, 41) so as to define a zone in which the fry and aquatic organisms can live and
- at least one protective structure (12, 22, 23, 32, 33, 42, 43, 44, 45) comprising mesh walls delimiting an empty volume, said protective structure being fixed removably to the material support (11, 21, 31, 41) and arranged therewith to establish a protective zone protecting the home zone, the material support forming a home cage (11, 21, 31) enclosing the relief-forming materials (9), **characterized in that** the protective structure forms a cage free of relief- forming materials.

2. A modular assembly (10, 20, 30, 50, 60) according to claim 1, **characterized in that** the protective structure (12, 22, 23, 32) is arranged opposite the home cage (11, 21, 31) .

3. A modular assembly (10, 20, 30, 50, 60) according to claim 1 or claim 2, **characterized in that** it comprises a plurality of protective structures (12, 22, 23, 32) organized in rows and/or columns relative to the home cage (11, 21, 31A, 31B).

4. A modular assembly (10, 20, 30, 50, 60) according to any one of claims 1 to 3, **characterized in that** it comprises a plurality of protective structures (12, 22, 23, 32) organized so as to be stacked on the home cage (11, 21, 31) .

5. A modular assembly (10, 20, 30, 50, 60) according to any one of claims 1 to 4, **characterized in that** it comprises at least two protective structures (32, 33) arranged on either side of the home cage (31B).

6. A modular assembly (10, 20, 30, 50, 60) according to any one of claims 3 to 5, **characterized in that** the protective structures (12, 22, 23, 32, 33) are fixed removably to each other.

7. A modular assembly (10, 20, 30, 50, 60) according to any one of claims 1 to 6, **characterized in that** the home cage (11, 21, 31, 31) has a smaller mesh size than the protective structure (12, 22, 23, 32, 33).

8. A modular assembly (10, 20, 30, 50, 60) according to any one of claims 1 to 7, **characterized in that** the home cage has a shape adapted to the underwater construction which it is intended to be fixed on.

9. A modular assembly (10, 20, 30, 50, 60) according to any one of claims 1 to 8, **characterized in that** the protective structure (12, 22, 23, 32, 33) has a shape matching that of the home cage (11, 21, 31,).

10. A modular assembly (10, 20, 30, 50, 60) according to any one of claims 1 to 9, **characterized in that** it comprises a stack of at least one home cage and at least one protective structure.

11. A modular assembly (10, 20, 30, 50, 60) according to any one of the preceding claims, **characterized in that** it comprises at least one structure in the form of a flexible band provided with light means able to attract the fry.

12. A modular assembly (10, 20, 30, 50, 60) according to any one of the preceding claims, **characterized in that** it includes at least one cover plate (14) arranged to cover at least one of the zones.

13. An arrangement for the protection of fry and other aquatic organisms comprising at least one modular assembly (10, 20, 30, 50, 60) according to any one of the preceding claims and a fixing structure (13, 130) suitable for fixing to a structure such as a dock, a pontoon, a dike or the like, said fixing structure comprising anchor arms enabling the anchoring of each modular assembly.

14. An arrangement according to the preceding claim, **characterized in that** the fixing structure comprises at least two rows of anchor arms, the arms of the lower row possibly having a different length from that of the arms of the upper row.
